# EUROPÄISCHE PATENTSCHRIFT

(11) **EP 3 390 201 B1**
(45) Veröffentlichungstag und Bekanntmachung des Hinweises auf die Patenterteilung: **03.02.2021**
(21) Anmeldenummer: 16804814.8
(22) Anmeldetag: 01.12.2016
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 18.12.2015 DE 102015225907
(43) Veröffentlichungstag der Anmeldung: 24.10.2018
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); MUNDING, Christoph, 9492 Eschen (LI); FORTE, Sebastian, 9493 Mauren (LI)
(74) Vertreter: thyssenkrupp Intellectual Property GmbH
(86) Internationale Anmeldenummer: PCT/EP2016/079448
(87) Internationale Veröffentlichungsnummer: WO 2017/102358

(56) Entgegenhaltungen:
- EP-A2- 1 854 701
- WO-A1-2015/076226
- DE-A1-102014 016 510
- DE-B3-102014 108 577

## Beschreibung

### Stand der Technik

Die Erfindung betrifft eine Lenksäule für ein Kraftfahrzeug, umfassend
eine Stelleinheit mit einer in einem Mantelrohr um ihre Längsachse drehbar gelagerten Lenkspindel,
eine Trageinheit, die mit der Karosserie des Kraftfahrzeugs verbindbar ist und in der die Stelleinheit in Richtung der Längsachse verstellbar aufnehmbar ist, und
eine Anschlageinrichtung mit einem bewegbar gelagerten Anschlagelement, das in eine Sperrstellung oder eine Freigabestellung bringbar ist, wobei das Anschlagelement in der Sperrstellung den Verstellweg der Stelleinheit relativ zur Trageinheit begrenzt und in der Freigabestellung die Verstellbarkeit in Richtung der Längsachse über den in der Sperrstellung begrenzten Verstellweg hinaus freigibt, wobei die Anschlageinrichtung einen Betätigungskörper mit einer trägen Masse aufweist, der mit dem Anschlagelement wirkverbunden und relativ zur Trageinheit bewegbar gelagert ist, wobei der Betätigungskörper aufgrund seiner Massenträgheit im Crashfall mit dem Anschlagelement zusammenwirkt zur Bewegung des Anschlagelements aus der Sperrstellung in die Freigabestellung.

Zur Anpassung der Lenkradposition an die Sitzposition des Fahrers eines Kraftfahrzeugs sind derartige Lenksäulen im Stand der Technik bekannt, bei denen das am hinteren Ende der Lenkspindel angebrachte Lenkrad durch eine Längenverstellung in Richtung der Lenksäulen-Längsachse im Fahrzeuginnenraum positioniert werden kann.

Die Längenverstellbarkeit wird dadurch realisiert, dass die Stelleinheit, welche die in einem Mantelrohr um die Längsachse drehbar gelagerte Lenkspindel umfasst, relativ zur Trageinheit, welche eine fest mit der Fahrzeugkarosserie verbundene Halterung der Lenksäule bildet, in Längsrichtung teleskopartig längsverschiebbar ist. Mittels einer lösbaren Spanneinrichtung ist die Stelleinrichtung relativ zur Trageinheit in unterschiedlichen Längspositionen des Verstellwegs zur Arretierung der jeweiligen Lenkradposition feststellbar, d.h. lösbar fixierbar. Eine Anschlageinrichtung sorgt dafür, dass der Verstellweg der Stelleinheit relativ zur Trageinheit im Normalbetrieb zur Einstellung der Lenkradposition in Richtung der Längsachse begrenzt wird. Dabei bildet ein am Tragelement gelagertes, in den Durchgangsquerschnitt der Stelleinheit vorstehendes Anschlagelement einen Endanschlag, gegen den die Stelleinheit anschlägt, wenn sie relativ zur Trageinheit, bezogen auf die Fahrtrichtung des Fahrzeugs nach vorn längsverschoben wird, d.h. eingefahren wird. Dadurch wird die Stelleinheit in der maximal nach vorn eingefahrenen bzw. verkürzten Verstellposition blockiert und kann manuell nicht weiter verschoben werden.

Als wirksame Maßnahme zur Verbesserung der Insassensicherheit bei einem Fahrzeugzusammenstoß, dem sogenannten Crashfall oder Fahrzeugfrontalaufprall, bei dem der Fahrer mit hoher Geschwindigkeit auf das Lenkrad aufprallt, ist es bekannt, die Lenksäule in Längsrichtung zusammenschiebbar zu gestalten, wenn ein hohe Kraft auf das Lenkrad ausgeübt wird, die einen nur im Crashfall auftretenden Grenzwert überschreitet. Um auch dann eine kontrollierte Abbremsung eines auf das Lenkrad auftreffenden Körpers zu ermöglichen, wenn sich die Stelleinheit in der maximal eingefahrenen bzw. verkürzten Verstellposition befindet, d.h. der durch das Anschlagelement in Sperrstellung begrenzten Endposition, ist es bekannt, dass das Anschlagelement aus der Sperrstellung in eine Freigabestellung gebracht wird, in der die Stelleinheit über die vorgenannte Endposition hinaus weiter in Richtung der Längsachse verschoben, d.h. eingefahren werden kann. Dadurch wird für die Stelleinheit ein zusätzlicher Bewegungsweg bereitgestellt, der für eine kontrollierte Energieabsorption im Crashfall genutzt werden kann.

Eine Lenksäule mit einer derartigen Anschlagvorrichtung ist beispielsweise in der

DE 10 2011 056 351 A1 beschrieben. Diese weist ein Anschlagelement auf, welches mit einem Bedienhebel einer Spannvorrichtung zur Fixierung der Stelleinheit in der Trageinheit verbunden ist. Im gelösten Zustand der Spanneinrichtung befindet sich das Anschlagelement in Sperrstellung, so dass die Stelleinheit zum Einstellen der Lenkradposition nur bis zum Anschlag nach vorn eingefahren werden kann. Beim Verschwenken des Bedienhebels zur Fixierung der Spanneinrichtung wird das Anschlagelement in die Freigabestellung bewegt, so dass die Stelleinheit im Crashfall weiter in Längsrichtung nach vorn bewegt werden kann. Vorteilhaft ist dabei, dass bei fixierter Lenksäule ein verlängerter Verstellweg zur Abbremsung der Stelleinheit zur Verfügung steht. Nachteilig an der Kopplung des Anschlagelements an die Spanneinrichtung ist jedoch, dass nur dann der zusätzliche Verstellweg sicher freigegeben wird, wenn der Bedienhebel tatsächlich weit genug verschwenkt wird. Außerdem wird bei der naturgemäß häufigen Betätigung der Spanneinrichtung jeweils auch die Anschlagvorrichtung betätigt, was Verschleiß und eine Beeinträchtigung der Funktion zur Folge haben kann.

Aus der WO 2015/076226 A1 ist eine Lenksäule nach dem Oberbegriff des Anspruchs 1 bekannt.

Angesichts der vorangehend erläuterten Problematik ist es eine Aufgabe der vorliegenden Erfindung, eine Lenksäule mit einer verbesserten Sicherheit zur Verfügung zu stellen.

### Darstellung der Erfindung

Zur Lösung der vorgenannten Problematik wird erfindungsgemäß vorgeschlagen, dass zwischen der Stelleinheit und der Trageinheit eine Energieabsorptionseinrichtung angeordnet ist.

Bei der Erfindung ist zwischen der Stelleinheit und der Trag-einheit eine Energieabsorptionseinrichtung angeordnet. Dabei handelt es sich um eine wirksame Maßnahme zur Verbesserung der Insassensicherheit bei einem Fahrzeugzusammenstoß, dem sogenannten Crashfall oder Fahrzeugfrontalaufprall, bei dem der Fahrer mit hoher Geschwindigkeit auf das Lenkrad aufprallt. Im Einzelnen ist es bekannt, die Lenksäule auch in Fixierstellung der Spanneinrichtung in Längsrichtung zusammenschiebbar zu gestalten, wenn eine hohe Kraft auf das Lenkrad ausgeübt wird, die einen Grenzwert überschreitet, der nur im Crashfall auftritt. Um für eine kontrollierte Abbremsung eines auf das Lenkrad auftreffenden Körpers zu sorgen, ist zwischen der Trageinheit und der Stelleinheit, die im Normalbetrieb durch die Spanneinrichtung miteinander verspannt und fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reisslasche oder Verbiegen eines langgestreckten Biegeelements, etwa einem Biegedraht oder Biegestreifen, oder durch die Aufweitung eines Langloches mittels eines Bolzens oder durch die Dehnung eines Blechstreifens oder durch Abtrennen eines Spans mittels eines Hobels. Durch die erfindungsgemäß ausgestaltete Anschlageinrichtung wird im Crashfall der für die Energieabsorption erforderliche Bewegungsweg in Richtung der Längsachse dadurch freigegeben, dass das Anschlagelement allein durch die dann wirkenden Trägheitskräfte aus der Sperrstellung in die Freigabestellung gebracht wird. Der zusätzliche Bewegungsweg für die Energieabsorptionseinrichtung steht auch dann zur Verfügung, wenn die Stelleinheit maximal in die Trageinheit eingefahren ist und dabei am Anschlagelement anliegt. Dadurch wird die Insassensicherheit erhöht.

Bei der Erfindung erfolgt die Betätigung der Anschlageinrichtung zur Überführung des Anschlagelements aus der Sperrstellung in die Freigabestellung allein aufgrund der im Crashfall wirkenden Beschleunigungen bzw. der daraus resultierenden Trägheitskräfte. Ein Vorteil gegenüber dem Stand der Technik ist, dass keine mechanische Verbindung zwischen der Anschlageinrichtung und einer Feststelleinrichtung der Lenksäule oder einem anderen manuellen Betätigungsmittel erforderlich ist. Dadurch wird eine Freigabe des über den Anschlag hinausgehenden zusätzlichen Verstellwegs im Crashfall sicher gewährleistet, und zwar unabhängig von der Betätigung einer Feststelleinrichtung oder dergleichen. Dabei ist sichergestellt, dass die Freigabe der Anschlageinrichtung im Crashfall auch dann erfolgt, wenn die Feststelleinrichtung nicht oder nicht korrekt manuell fixiert wurde. Außerdem wird praktisch ausgeschlossen, dass durch den bei häufiger Betätigung der Feststelleinrichtung auftretenden Verschleiß die Funktion der Anschlageinrichtung beeinträchtigt wird, weil die Anschlageinrichtung erfindungsgemäß tatsächlich nur im Crashfall betätigt wird. Entsprechend wird durch die Erfindung die Betriebs- und Funktionssicherheit der Anschlageinrichtung erhöht, was unmittelbar der Fahrzeugsicherheit zugutekommt.

In der erfindungsgemäßen Anschlageinrichtung ist mindestens ein Betätigungskörper mit einem Freiheitsgrad der Bewegung in Fahrtrichtung des Fahrzeugs beweglich aufgenommen. Bevorzugt ist der Betätigungskörper in Richtung der Längsachse der Lenksäule bewegbar gelagert, die zumindest mit einer Richtungskomponente in Fahrtrichtung nach vorn weist. Im Crashfall wirkt durch die Massenträgheit auf den Betätigungskörper eine bezüglich der Fahrzeug-Karosserie in Fahrtrichtung nach vorn gerichtete Trägheitskraft, die proportional ist zur auftretenden Beschleunigung und der Masse des Betätigungskörpers. Zumindest eine Teilkomponente dieser Trägheitskraft wird von dem Betätigungskörper direkt oder indirekt als Betätigungskraft entweder direkt auf das Anschlagelement übertragen oder aktiviert indirekt eine Betätigungseinrichtung zur Bewegung des Anschlagelements aus der Sperrstellung in die Freigabestellung. Entsprechend wird im Crashfall die Anschlageinrichtung selbsttätig gelöst, ohne dass eine vorherige manuelle Betätigung oder Aktivierung erforderlich wäre. Da die Anschlageinrichtung ausschließlich im Crashfall betätigt wird, kann auch keine Beeinträchtigung durch Verschleiß aufgrund häufiger Betätigung auftreten.

Die in Fahrtrichtung auf den Betätigungskörper wirkende Trägheitskraft entspricht dem Produkt aus der im Crashfall auftretenden Beschleunigung und der Masse des Betätigungskörpers. Damit die Trägheitskraft als Betätigungskraft zur sicheren Betätigung der Anschlageinrichtung ausreicht, wird entsprechend eine hinreichend große Masse des Betätigungskörpers vorgegeben. Im Crashfall treten bedeutend größere Beschleunigungskräfte als beim Verzögern des Fahrzeuges im Normalbetrieb auf. Somit kann die Masse des Betätigungskörpers so ausgelegt werden, dass diese nur im Crashfall die vorhandene Haftreibung auf Grund der wirkenden Trägheitskraft überwindet und sich in Bewegung versetzt. Bei einer Verzögerung des Fahrzeuges im Normalbetrieb, beispielsweise bei einer Gefahrenbremsung, sind die wirkenden Trägheitskräfte des Betätigungskörpers zu gering, so dass der Betätigungskörper in seiner ursprüngliche Position verbleibt und die Anschlagseinrichtung in ihrer Sperrstellung verbleibt.

Es kann vorgesehen sein, dass die Anschlageinrichtung ein Getriebe aufweist. Das Getriebe kann zwischen dem Betätigungskörper und dem Anschlagelement angeordnet sein und ermöglicht eine gezielt vorgegebene Übertragung der im Crashfall auftretenden Trägheitskraft als Betätigungkraft, die vom Betätigungskörper mit definierter Richtung und Größe unmittelbar oder mittelbar auf das Anschlagelement übertragen wird, oder die eine Betätigungseinrichtung aktiviert oder auslöst, welche ihrerseits eine Verlagerung des Anschlagelements aus der Sperrstellung in die Freigabestellung bewirkt. Beispielsweise kann eine Kraftübersetzung zur Verstärkung der Trägheitskraft vorgesehen sein, so dass das Anschlagelement auch durch eine relativ kleine Masse des Betätigungskörpers sicher gelöst wird.

Es kann weiterhin vorteilhaft sein, dass das Getriebe als Umlenkgetriebe ausgebildet ist, welches eine Bewegung des Betätigungskörpers in einer ersten Bewegungsrichtung - beispielsweise in Richtung der Längsachse bzw. in Fahrtrichtung - umsetzt oder freigibt in eine Bewegung des Anschlagelements in einer zweiten, von der ersten Bewegungsrichtung unterschiedlichen Bewegungsrichtung - beispielsweise quer zur Richtung der Längsachse. Dadurch kann die prinzipiell durch die Fahrtrichtung im Crashfall vorgegebene Richtung der Trägheitskraft als Betätigungskraft in eine davon abweichende Bewegung des Anschlagelements relativ zur Trageinheit umgelenkt werden. So kann beispielsweise eine durch die Trägheitskraft ausgelöste Bewegung des Betätigungskörpers mit einer Komponente parallel zur Längsachse umgesetzt werden in eine Bewegung des Anschlagelements quer zur Längsachse, durch die das Anschlagelement aus der Sperrstellung in die Freigabestellung gebracht werden kann. Dabei kann das Getriebe auch eine Art Sperrgetriebe sein, welches durch die Bewegung des Betätigungselements im Crashfall entsperrt oder entriegelt wird, so dass eine Bewegung des Anschlagelements in die Freigabestellung ermöglicht wird. Ein derartiges Umlenkgetriebe kann beispielsweise als Keilgetriebe mit schiefer Ebene, als Hebel- oder Wälzgetriebe realisiert werden.

Das Umlenkgetriebe kann ausgelegt sein, die auf den Betätigungskörper wirkende Trägheitskraft als Betätigungskraft mit geänderter Richtung auf das Anschlagelement zu übertragen, oder die Bewegung des Anschlagelements durch eine andere Kraftquelle freizugeben. Gegebenenfalls kann das Umlenkgetriebe zusätzlich eine Kraftübersetzung aufweisen, um die Trägheitskraft als Betätigungskraft mit geändertem Betrag zu übertragen, beispielsweise zur Erhöhung der direkt oder indirekt auf das Anschlagelement ausgeübten Kraft.

Es kann bevorzugt vorgesehen sein, dass das Anschlagelement in Sperrstellung quer zur Längsachse relativ zur Trageinheit vorsteht in einen Bewegungsdurchgang der Stelleinheit. Zur Längsverstellung wird die Stelleinheit entlang der Längsachse relativ zur Trageinheit bewegt und passiert dabei einen ihrem Querschnittsprofil entsprechenden Bewegungsraum, nämlich den Bewegungsdurchgang. Ein in diesen Bewegungsdurchgang vorstehendes Anschlagelement blockiert den freien Bewegungsdurchgang zumindest teilweise, so dass die Stelleinheit mit zumindest einer Gegenanschlagfläche in Längsrichtung gegen eine Anschlagfläche an dem Anschlagelement bewegt wird, bis es diese kontaktiert, d.h. anschlägt. Dadurch wird in Höhe des Anschlagelements eine Anschlagposition definiert, in der die Bewegung der Stelleinheit in Längsrichtung relativ zur Trageinheit begrenzt ist. Die Anschlagfläche am Anschlagelement und die damit korrespondierende Gegenanschlagfläche an der Stelleinheit können als Flächenabschnitte ausgebildet sein, die sich quer zur Längsachse erstrecken und sich dabei in Richtung der Längsachse gesehen zur Bildung eines Anschlagbereichs überdecken. Bevorzugt umfasst das Anschlagelement einen Anschlagdämpfer. Der Anschlagdämpfer kann aus einem Elastomer oder einem Kunststoff beschaffen sein. Damit kann das Anschlagen gedämpft werden, so dass störende Geräusche beim Anschlagen reduziert werden.

Damit die Anschlageinrichtung wahlweise in Sperrstellung oder in Freigabestellung gebracht werden kann, ist es vorteilhaft, dass das Anschlagelement quer zur Längsachse bewegbar gelagert ist. Dadurch kann das Anschlagelement zur Einstellung der Sperrstellung im Wesentlichen senkrecht in den Bewegungsdurchgang der Stelleinheit vorstehen, und zur Freigabe quer zur Längsachse bewegt werden, so dass es nicht mehr in den Bewegungsdurchgang der Stelleinheit vorsteht und die Stelleinheit nach vorn in Richtung der Längsachse über die Position des Anschlagelements weiter bewegt werden kann. Unter im Wesentlichen senkrecht wird eine Abweichung von ±10° zur senkrechten Anordnung verstanden.

Es kann vorgesehen sein, dass der Betätigungskörper an der Trageinheit angeordnet entlang einer definierten Bewegungsbahn geführt ist. Die Bewegungsbahn wird durch eine Führungseinrichtung bereitgestellt, welche die mögliche Bewegung des Betätigungskörpers beim Einwirken der Trägheitskraft im Crashfall leitet und begrenzt. Eine Bewegungsbahn kann beispielsweise eine Linearführung aufweisen, an welcher der Betätigungskörper sich entlang bewegen kann. Die Linearführung kann gerade zusätzlich oder alternativ gebogene Führungsabschnitte aufweisen, so dass der Betätigungskörper in entsprechende Richtungen bewegt werden kann. Eine Führungseinrichtung kann alternativ oder zusätzlich Dreh- oder Schwenklager aufweisen, so dass der Betätigungskörper im Crashfall eine entsprechende Dreh- oder Schwenkbewegung ausführt. Durch die Führung des Betätigungskörpers entlang einer definierten Bahn kann die von der Trägheitskraft abgeleitete Betätigungskraft optimiert auf das Anschlagelement oder eine Betätigungsvorrichtung für das Anschlagelement übertragen werden.

Bevorzugt kann die Anschlageinrichtung ein Führungsgehäuse aufweisen. In dem Führungsgehäuse kann der Betätigungskörper angeordnet sein. Das Führungsgehäuse kann an der Trageinheit angebracht sein und den Betätigungskörper zumindest teilweise umschließen und gegen äußere Einflüsse schützen. Weitere Funktionselemente der Anschlageinrichtung können ebenfalls in dem Führungsgehäuse angeordnet sein, beispielsweise das Anschlagelement und/oder ein Getriebe oder dergleichen. Mögliche Beeinträchtigungen der Funktion, beispielsweise durch Verunreinigungen und eindringende Feuchtigkeit, können auf diese Weise wirksam ausgeschlossen werden, insbesondere wenn das Führungsgehäuse abgedichtet ausgebildet ist.

Das Führungsgehäuse kann für den Betätigungskörper bevorzugt eine Führungseinrichtung aufweisen, welche eine Bewegungsbahn für den Führungskörper definiert bzw. bereitstellt. Diese kann beispielsweise eine Führungsbahn oder eine andere Form der beweglichen Lagerung für den Betätigungskörper umfassen, welche eine definierte Bewegung des Betätigungskörpers unter dem Einfluss der im Crashfall auftretenden Trägheitskraft bewirkt.

Es kann vorgesehen sein, dass der Betätigungskörper auf zumindest einem Wälzkörper gelagert ist. Dadurch kann beispielsweise eine Kugel- oder Rollenführung realisiert werden, beispielsweise ein Linearlager mit Nadelrollen, welches eine leichtgängige Linearführung für den Betätigungskörper bildet. Abweichend ausgebildete wälzgelagerte Führungseinrichtungen mit geraden oder gebogenen Führungsflächen können ebenfalls bereitgestellt werden.

Der Betätigungskörper kann zumindest teilweise mit einer reibungsmindernden Gleitbeschichtung beschichtet sein. Bevorzugt ist der Betätigungskörper vollständig mit einer reibungsmindernden Gleitbeschichtung beschichtet. Eine derartige Gleitbeschichtung kann beispielsweise durch eine außen zumindest in Teilbereichen aufgebrachte Kunststoffbeschichtung, beispielsweise eine PTFE-Beschichtung gebildet werden. Eine derartige Beschichtung kann entweder auf dem Betätigungskörper angebracht sein, oder alternativ auf der Oberfläche einer Führungsbahn, an welcher der Betätigungskörper entlang gleitet, oder auch auf dem Betätigungskörper und der Führungsbahn. Dadurch werden die auftretenden Reibungskräfte zwischen Betätigungskörper und Führungsbahn verringert und es kann eine leichtgängige und sichere Bewegung des Betätigungskörpers unter dem Einfluss der im Crashfall auftretenden Trägheitskraft auf der Führungsbahn gewährleistet werden, die als Gleitführung oder -bahn ausgebildet sein kann. Dadurch kann eine funktionssichere Bauform der Anschlageinrichtung mit relativ geringem Aufwand zur Verfügung gestellt werden.

Eine vorteilhafte Bauform der Erfindung sieht vor, dass die Anschlageinrichtung eine Energiespeichereinrichtung und eine Auslösevorrichtung aufweist, wobei die Energiespeichereinrichtung wirkverbunden ist mit dem Anschlagelement und die Auslösevorrichtung wirkverbunden ist mit dem Betätigungskörper. Im Crashfall wird die Auslösevorrichtung durch die Trägheitskraft des Betätigungskörpers betätigt und ausgelöst. Dadurch wird eine Energieübertragung von der Energiespeichereinrichtung auf das Anschlagelement freigegeben, beispielsweise durch eine Entriegelung der Bewegung des Anschlagelements, so dass das Anschlagelement durch die in der Energiespeichereinrichtung gespeicherte Energie aus der Sperrstellung in die Freigabestellung bewegt werden kann. Hierbei wird folglich nicht die im Crashfall auftretende Trägheitskraft unmittelbar genutzt, um das Anschlagelement zu bewegen, sondern die Trägheitskraft des Betätigungskörpers bewirkt mittelbar die Aktivierung einer äußeren Betätigungskraft auf das Anschlagelement. Mit anderen Worten wird der erfindungsgemäß durch die Trägheitskraft angetriebene Betätigungskörper nur zum Einschalten bzw. Entriegeln einer Betätigungseinrichtung der Anschlageinrichtung genutzt, die durch die in der Energiespeichereinrichtung gespeicherte Energie angetrieben wird.

Ein Vorteil der letztgenannten Ausführung ist, dass durch die Energiespeichervorrichtung prinzipiell jederzeit eine hinreichende Energiemenge zur Verfügung steht, um das Anschlagelement sicher in die Freigabestellung zu bringen. Durch den Betätigungskörper muss im Crashfall nur eine relativ kleine Kraft aufgewendet werden, um die Energieübertragung von der Energiespeichervorrichtung freizugeben bzw. einzuschalten. Dadurch kann der Betätigungskörper relativ klein und leicht gestaltet werden, wobei gleichzeitig eine hohe Funktionssicherheit der Anschlageinrichtung im Crashfall sichergestellt bleibt.

Die Energiespeichereinrichtung kann eine Vorspanneinrichtung aufweisen, welche das Anschlagelement in der Sperrstellung in Richtung der Freigabestellung elastisch vorspannt. Die Vorspanneinrichtung kann beispielsweise ein Federelement aufweisen, welches in der Sperrstellung eine Federkraft auf das Anschlagelement ausübt, die in Richtung auf die Freigabestellung des Anschlagelements gerichtet ist. In einer vorteilhaften Weiterbildung kann vorgesehen sein, dass das Federelement und das Anschlagelement einteilig ausgebildet sind. In dieser Ausführung befindet sich die Anschlageinrichtung in normalem Betrieb in Sperrstellung, wobei der Verstellweg der Stelleinheit relativ zur Trageinheit durch das Anschlagelement begrenzt ist, d.h. die Verschiebung der Stelleinheit bezüglich der Fahrtrichtung nach vorn in der Anschlagposition blockiert ist. Die von der Energiespeichereinrichtung, hier der Vorspanneinrichtung ausgeübte Vorspannkraft, beispielsweise die von einem Federelement ausgeübte Federkraft, die das Anschlagelement in die Freigabestellung bewegen will, wird im normalen Betriebszustand von der Auslösevorrichtung abgestützt, so dass das Anschlagelement sicher in der Sperrstellung gehalten wird. Im Crashfall wird die Auslösevorrichtung durch den Betätigungskörper ausgelöst, so dass sich dann das Anschlagelement unter dem Einfluss der Federkraft aus der Sperrstellung in die Freigabestellung bewegen kann. Dabei kann die Auslösevorrichtung durch einen relativ einfachen Riegelmechanismus gebildet werden, beispielsweise mit einem Sperrriegel, der von dem Betätigungskörper bewegt wird, um die Bewegung des Anschlagelements in die Freigabestellung freizugeben. Die Entriegelung im Crashfall erfolgt dabei zuverlässig.

Bevorzugt umfasst die Lenksäule eine Spanneinrichtung, die in Fixierstellung die Stelleinheit im Normalbetrieb relativ zur Trageinheit festlegt und die in Freigabestellung eine Verstellung der Stelleinheit relativ zur Trageinheit zumindest in Längsrichtung freigibt. Die Längenverstellbarkeit wird dadurch realisiert, dass die Stelleinheit relativ zur Trageinheit in Längsrichtung teleskopartig verstellbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf die von der Trageinheit gehaltene Stelleinheit, wobei in geöffnetem Zustand der Spanneinrichtung - auch als Freigabestellung oder Löseposition bezeichnet - eine Verschiebung der Stelleinheit in gegenüber der Trageinheit in Längsrichtung zur Einstellung der Lenkradposition möglich ist und in geschlossenem Zustand - Fixierstellung oder Feststellposition genannt - die Stelleinheit mit der Trageinheit verspannt ist und im normalen Fahrbetrieb die Lenkradposition unter den zu erwartenden mechanischen Beanspruchungen fixiert ist. Die Spanneinrichtung kann durch einen manuellen Bedienhebel oder durch einen motorischen Antrieb betätigt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine Seitenansicht der Lenksäule gemäß Figur 1,
- Figur 3: einen Längsschnitt durch die Lenksäule gemäß Figur 1 oder 2 in Sperrstellung des Anschlageinrichtung,
- Figur 4: einen Längsschnitt durch die Lenksäule gemäß Figur 1 oder 2 in Freigabestellung des Anschlageinrichtung,
- Figur 5: einen Längsschnitt durch eine Anschlageinrichtung in einer ersten Ausführungsform in Sperrstellung,
- Figur 6: einen Längsschnitt wie in Figur 5 durch eine Anschlageinrichtung in einer ersten Ausführungsform in Freigabestellung,
- Figur 7: einen Längsschnitt wie in Figur 5 durch eine Anschlageinrichtung in einer zweiten Ausführungsform in Sperrstellung,
- Figur 8: einen Längsschnitt wie in Figur 5 durch eine Anschlageinrichtung in einer dritten Ausführungsform in Sperrstellung,
- Figur 9: einen Längsschnitt wie in Figur 5 durch eine Anschlageinrichtung in einer vierten Ausführungsform in Sperrstellung,
- Figur 10: einen Längsschnitt wie in Figur 9 durch die Anschlageinrichtung in der vierten Ausführungsform in Freigabestellung,
- Figur 11: eine teilweise Detailansicht einer Crasheinrichtung an einer Lenksäule gemäß Figur 1,
- Figur 12: Stelleinheit für eine erfindungsgemäßen Lenksäule mit schematisch angedeuteter Crashaktivierung gemäß Figur 10,
- Figur 13: Längsschnitt durch eine Stelleinheit gemäß Figur 12 vor einem Crash,
- Figur 14: Längsschnitt durch eine Stelleinheit gemäß Figur 12 nach einem Crash,

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

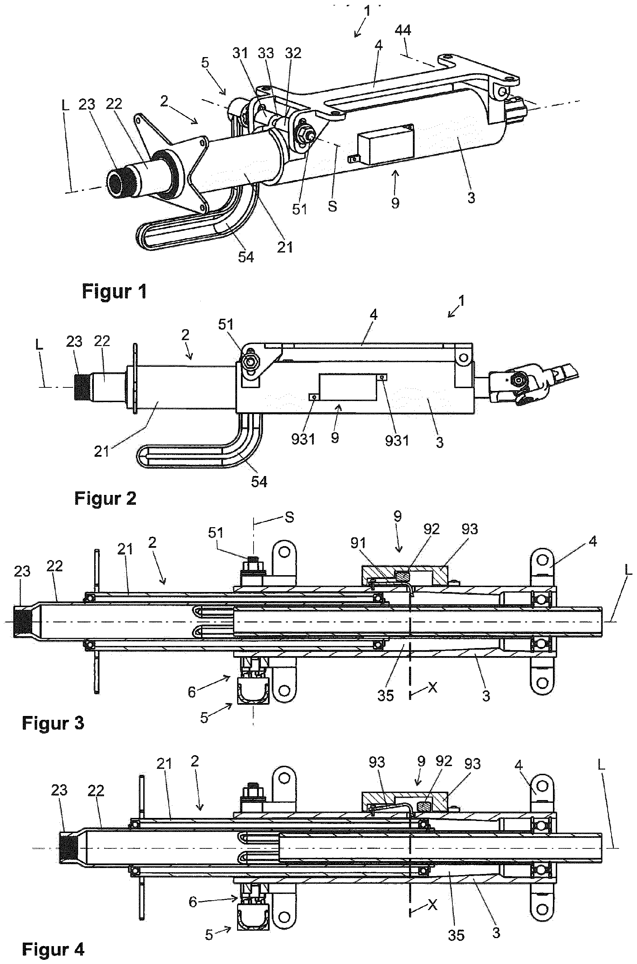

Figuren 1 bis 4 zeigen eine Lenksäule 1, die eine Stelleinheit 2 umfasst, mit einem Mantelrohr 21, in dem eine Lenkspindel 22 um die Längsachse L drehbar gelagert ist. An einem bezüglich der Fahrtrichtung hinteren Abschnitt 23 der Lenkspindel 22 kann ein nicht dargestelltes Lenkrad befestigt werden.

Die Stelleinheit 2 wird in einer Trageinheit 3 gehalten, die ihrerseits an einer Konsoleneinheit 4 befestigt ist, die an einer nicht dargestellten Karosserie eines Kraftfahrzeugs anbringbar ist.

Die Trageinheit 3 umfasst eine Ausnehmung mit einem freien Bewegungsdurchgang 35, in der die Stelleinheit 2 aufgenommen ist, wobei die Trageinheit 3 Seitenabschnitte 31 und 32 umfasst, zwischen denen sich ein Schlitz 33 in Richtung der Längsachse L erstreckt und auf die von einer Spanneinrichtung 5 quer zur Längsachse L eine Klemmkraft ausgeübt werden kann, wodurch diese gegeneinander zusammengedrückt werden können und somit der Schlitz 33 verschmälert wird. Dadurch kann das in der Trageinheit 3 angeordnete Mantelrohr 21 der Stelleinheit 2 in geschlossener Stellung (Fixierstellung) der Spanneinrichtung 5 in der Trageinheit 3 festgespannt werden, während in gelöster Stellung (Freigabestellung) die Trageinheit 3 keine Klemmkraft auf das Mantelrohr 21 ausübt, so dass die Stelleinheit 2 zur Einstellung der Lenkradposition in Richtung der Längsachse L, d.h. in Längsrichtung verstellbar ist. Weiterhin ist die Stelleinheit 2 in der gelösten Stellung gegenüber der Konsoleneinheit 4 um eine Schwenkachse 44 verschwenkbar. Somit kann eine Höhenverstellbarkeit der Lenksäule 1 bereitgestellt werden.

Die Spanneinrichtung 5 weist als Betätigungselement eine Spannachse 51 auf, die um ihre Drehachse S drehbar in den gegenüberliegenden Seitenabschnitten 31, 32 der Trageinheit 3 gelagert ist. An der Spannachse 51 ist ein Spannhebel 54 zur manuellen Drehung der Spannachse 51 drehfest angebracht. Alternativ zum Spannhebel 54 kann auch ein motorischer Antrieb zum Einsatz kommen.

In Freigabestellung der Spanneinrichtung 5 kann die Stelleinheit 2 in dem Bewegungsdurchgang 35, der sich im Wesentlichen koaxial zur Längsachse L innerhalb der Trageinheit 3 erstreckt, parallel zur Längsachse L vor und zurück bewegt werden, d.h. zur Verstellung der Lenkradposition ein- bzw. ausgefahren werden. Dabei bewegt sich die Stelleinheit 2 mit geringem radialen Spiel durch den freien offenen Durchgangsquerschnitt der Trageinheit 3.

An der Trageinheit 3 ist eine erfindungsgemäße Anschlageinrichtung 9 angeordnet.

Figur 3 und Figur 4 zeigen einen Längsschnitt durch die Lenksäule 1 entlang der Längsachse L, und zwar in einer Ansicht von oben. Eine Anschlagposition X bezeichnet eine Längenposition auf der Längsachse L bezüglich der Trageinheit 3, die durch die Anschlageinrichtung 9 vorgegeben wird, wie im Folgenden noch detailliert erläutert wird. Dabei zeigt Figur 3 die Lenksäule 1 in einer Verstellposition im normalen Betrieb, bei dem die Stelleinheit 2 in die Trageinheit 3 nach vorn, also in der Zeichnung nach rechts, nicht bis zur Anschlagposition X in die Trageinheit 3 eingeschoben ist. Figur 4 illustriert die Situation nach einem Crashfall, bei dem die Stelleinheit 2 nach vorn über die Anschlagposition X in die Trageinheit 3 eingefahren ist, also in der Zeichnung nach rechts über die Anschlagposition X hinaus.

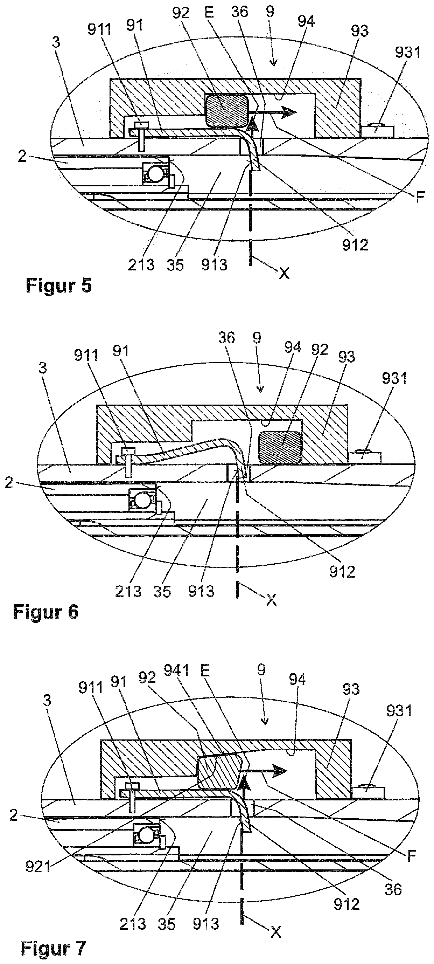

Eine Anschlageinrichtung 9 ist in verschiedenen Ausführungsformen vergrößert in den Figuren 5 bis 10 dargestellt, wobei prinzipiell gleichwirkende Funktionselemente mit denselben Bezugszeichen versehen sind.

In sämtlichen gezeigten Ausführungen umfasst die Anschlageinrichtung 9 ein Anschlagelement 91, einen Betätigungskörper 92 und ein Führungsgehäuse 93.

Das Führungsgehäuse 93 ist mittels eines Befestigungselements 931 auf der Außenseite an der Trageinheit 3 befestigt, und ist bevorzugt als geschlossener Kasten ausgebildet, so dass die darin befindlichen Bauteile geschützt untergebracht sind, zumindest staubdicht eingeschlossen sind.

In dem Führungsgehäuse 93 ist eine Führungsbahn 94 ausgebildet, an welcher der Betätigungskörper 92 anliegt und - im Crashfall durch die nach vorn wirkenden Trägheitskräfte - in Richtung der Längsachse L entlang bewegt werden kann, wie dies mit dem Pfeil nach vorn, also in der Zeichnung nach rechts, angedeutet ist.

Das Anschlagelement 91 ist in den Ausführungen gemäß Figuren 5 bis 8 als im wesentlichen L-förmiger Bügel ausgebildet, der mit einem Schenkel mittels eines Befestigungselements 911 auf der Außenseite der Trageinheit 3 festgelegt ist. Der andere Schenkel des Anschlagelements 91 bildet einen Sperrabschnitt 912, der sich in der Figur 5, 7 und 8 gezeigten Sperrstellung durch eine radiale Öffnung 36 in der Trageinheit 3 erstreckt. Dabei steht der Sperrabschnitt 912 nach innen in den Bewegungsdurchgang 35 vor, in dem die Stelleinheit 2 zur Verstellung verschiebbar aufgenommen ist, wie mit dem Pfeil angedeutet. Der Sperrabschnitt 912 weist eine Anschlagfläche 913 auf, die auf seiner bezüglich der Längsachse nach hinten gerichteten Seite angeordnet ist. Die Anschlagfläche 913 definiert in Längsrichtung eine Anschlagposition X und liegt in Richtung der Längsachse L gesehen einer Gegenanschlagfläche 213 gegenüber, die an der vorderen Stirnseite der Stelleinheit 2 angeordnet ist.

Das Funktionsprinzip der Anschlageinrichtung 9 in der in den Figuren 5, 7, 8 und 9 dargestellten Sperrstellung ist, dass der Verstellweg der Stelleinheit 2 durch den in den Bewegungsdurchgang 35 vorstehenden Sperrabschnitt 912 an der Anschlagposition X blockiert und dadurch begrenzt ist. Die Stelleinheit 2 kann nur so weit nach vorn bewegt, d.h. zur Verkürzung der Lenksäule 1 eingefahren werden, bis sie mit ihrer Gegenanschlagfläche 213 in der Anschlagposition X gegen die Anschlagfläche 913 des Anschlagelements 91 anschlägt.

Bei der in den Figuren 5 bis 8 dargestellten Ausführung ist das Anschlagelement 91 als Federelement ausgebildet, genauer definiert als eine Blattfeder, deren entspannter Ruhezustand in Figur 6 gezeigt ist. Daraus ist entnehmbar, dass das Anschlagelement 91 mit seinem freien Ende so weit von der Außenseite der Trageinheit 3 nach außen absteht, dass der Sperrabschnitt 912 sich außerhalb des Bewegungsdurchgangs 35 befindet, und die Anschlagfläche 913 nicht der Gegenanschlagfläche 213 gegenüberliegt. Diese Einstellung entspricht der Freigabestellung, sie vor der Montage vorliegt, und auch nach der Auslösung im Crashfall, wie nachfolgend noch erläutert wird. Um die Anschlageinrichtung 9 in den Betriebszustand zu bringen, nämlich in die in Figuren 5, 7 und 8 dargestellte Sperrstellung, wird das Anschlagelement 91 gegen seine im Bereich des Sperrabschnitts 912 bezüglich der Trageinheit 3 nach außen gerichtete Federkraft E elastisch gebogen, bis der Sperrabschnitt 912 durch die Öffnung 36 in der Trageinheit 3 nach innen in den Bewegungsdurchgang 35 vorsteht, wodurch die Sperrstellung realisiert wird.

Folglich drückt das Anschlagelement 91 in der Sperrstellung mit der Federkraft E gegen den Betätigungskörper 92, der sich seinerseits gegen die Führungsbahn 94 abstützt. Mit anderen Worten bildet das als Federelement ausgebildete Anschlagelement 91, das in der Sperrstellung gespannt ist, eine Energiespeichereinrichtung, welche durch die gespeicherte Federenergie das Anschlagelement 91 aus der Sperrstellung in Richtung auf die in Figur 6 dargestellte Freigabeposition vorspannt. Der Betätigungskörper 92 dient als Sperr- oder Riegelement, welches erst dann den Übergang des Anschlagelements von der Sperr- in die Freigabestellung ermöglicht, wenn es zwischen der Oberseite des Anschlagelements 91 und der Führungsbahn 94 entfernt wird. Damit wird eine Auslösevorrichtung realisiert, welche mit dem Betätigungskörper wirkverbunden ist.

Im Crashfall wirkt aufgrund der Massenträgheit auf den Betätigungskörper 92 eine Trägheitskraft F, die bezüglich der Fahrtrichtung nach vorn gerichtet ist. In Figur 5 ist die parallel zur Längsachse L gerichtete Kraftkomponente dieser Trägheitskraft F mit dem Pfeil schematisch eingezeichnet. Der Betrag der Trägheitskraft F entspricht dem Produkt aus der Masse des Betätigungskörpers 92 und der Beschleunigung bei der abrupten Abbremsung des Fahrzeugs im Crashfall.

Unter der Einwirkung der Trägheitskraft F wird der Betätigungskörper 92 aus der in Figur 5 gezeigten Blockierstellung, in der er das Anschlagelement 91 in der Sperrstellung verriegelt, nach vorn, d.h. in der Zeichnung nach rechts bewegt. Dabei gleitet er nach vorn an der Führungsbahn 94 entlang und entfernt sich aus dem Zwischenraum zwischen der Oberseite des Anschlagelements 91 und der Führungsbahn 94. Dadurch kommt das Anschlagelement 91 bezüglich der Trageinheit 3 nach außen frei und bewegt seinen Sperrabschnitt 912 unter dem Einfluss der Federvorspannung nach außen aus der Öffnung 36 teilweise heraus auf die Führungsbahn 94 zu. Dadurch wird die Anschlagfläche 913 des Sperrabschnitts 912 des Anschlagelements 91 aus dem Bewegungsdurchgang 35 entfernt. Dies entspricht der in Figur 6 dargestellten Freigabestellung des Anschlagelements 91 der Anschlageinrichtung 9. Folglich kann die Stelleinheit 2 mit ihrer vorderen Gegenanschlagfläche 213 die Anschlagposition X in parallel zur Längsachse L nach vorn frei passieren.

Die in Figur 7 in Sperrstellung wie dargestellte Ausführung entspricht im Wesentlichen der in Figur 5 dargestellten Ausführung. Ein Unterschied dazu ist, dass die Führungsbahn 94 einen geneigten Abschnitt 941 aufweist. Der Betätigungskörper 92 hat eine ebenfalls geneigte Oberseite, die in der gezeigten Sperrstellung an dem Abschnitt 941 anliegt. Durch diese keilförmig in Richtung der Längsachse nach vorn erweiterte Ausbildung ist wird im Crashfall der Übergang in die Freigabestellung erleichtert. Sobald die Auslösung erfolgt, wird die Bewegung des Betätigungskörpers 92 durch die Federkraft des Anschlagelements zusätzlich unterstützt.

Damit der Betätigungskörper 92 mit geringer Reibung auf der Führungsbahn 94 und auf dem Anschlagelement 91 nach vorn entlang gleiten kann, kann er zumindest teilweise mit einer reibungsmindernden Beschichtung versehen sein, beispielsweise aus PTFE (Polytetrafluorethylen) oder Graphit. Zusätzlich oder alternativ können die Führungsbahn 94 und / oder das Anschlagelement 91 ebenfalls zumindest an den Kontaktflächen mit dem Betätigungskörper 92 ebenfalls reibungsmindernd ausgestaltet sein.

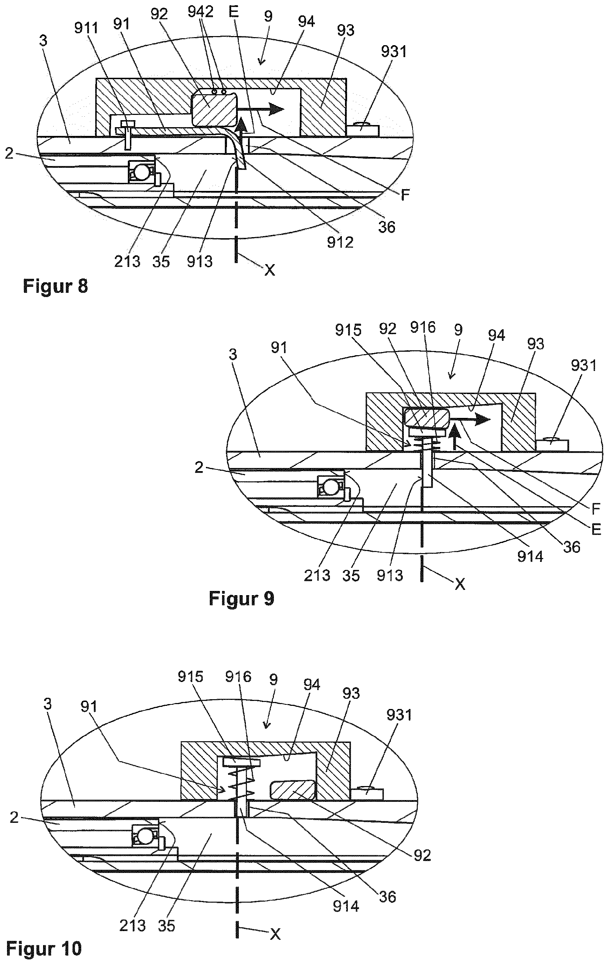

Eine Verringerung der Haft- und Gleitreibung zwischen dem Betätigungskörper 92 und der Führungsbahn 94 wird bei der in Figur 8 dargestellten dritten Ausführungsform dadurch erreicht, dass zwischen dem Betätigungskörper 92 und der Führungsbahn 94 Wälzkörper 942 angeordnet sind, beispielsweise Nadelrollen. Diese bilden eine wälzgelagerte Linearführung für die Bewegung des Betätigungskörpers 92 im Crashfall, die besonders reibungsarm und zuverlässig ist.

Figuren 9 und 10 zeigen eine weitere Ausführungsform, bei der das Anschlagelement 9 einen Anschlagstift 914 umfasst, der quer zur Längsrichtung verschiebbar durch die Öffnung 36 in der Trageinheit 3 hindurchgeführt ist. An seinem inneren Ende, welches in der in Figur 9 gezeigten Sperrstellung in den Bewegungsdurchgang 35 vorsteht, ist eine Anschlagfläche 913 ausgebildet, deren Funktion dieselbe ist wie in den vorangehend beschriebenen Ausführungen. Die Anschlagsfläche 913 kann ein nicht gezeigtes Dämpfungselement umfassen, das den Anschlag der Gegenanschlagsfläche an der Anschlagsfläche dämpft. Ein solches Dämpfungselement kann als Gummipuffer oder Kunststoffelement ausgebildet sein. Am anderen Ende hat der Anschlagstift 914 einen Kopf 915. Durch ein zwischen der Unterseite des Kopfes 915 und der Außenseite der Trageinheit 3 vorgespannt eingesetzten Federelement 916, im dargestellten Beispiel einer koaxial auf dem Anschlagstift 914 angeordneten Schraubenfeder, wird auf das Anschlagelement 9 eine nach außen gerichtete Federkraft E ausgeübt. Wie bereits zu Figur 5 erläutert, bildet dieses Federelement 916 ebenfalls einen Energiespeicher zur Bewegung des Anschlagelements 9 aus der in Figur 9 dargestellten Sperrstellung in die Freigabestellung gemäß Figur 10.

Die Auslösung erfolgt ebenfalls dadurch, dass Betätigungskörper 92 unter dem Einfluss der im Crashfall auftretenden Trägheitskraft F nach vorn zwischen dem Kopf 915 und der Führungsbahn 94 entfernt wird, wobei die Anschlageinrichtung 9 ausgelöst wird und das Anschlagelement 91 sich unter dem Einfluss der in dem Federelement 916 gespeicherten Federenergie in die in Figur 10 gezeigte Freigabeposition bewegt.

Im Crashfall wird durch die erfindungsgemäße Anschlageinrichtung 9 allein durch die dann auftretenden Trägheitskräfte bewirkt, dass das Anschlagelement 91 aus der Sperrstellung in der Freigabeposition gebracht wird. Dadurch kann die Stelleinheit 2 über die Anschlagposition hinaus weiter parallel zur Längsachse nach vorn relativ zur Trageinheit 3 bewegt, d.h. eingefahren werden.

Bevorzugt wird der im Crashfall von der Anschlageinrichtung 9 freigegebene zusätzliche Verstellweg dazu genutzt, die kinetische Energie eines auf die Lenksäule auftreffenden Körpers in einer Energieabsorptionseinrichtung gezielt umzuwandeln.

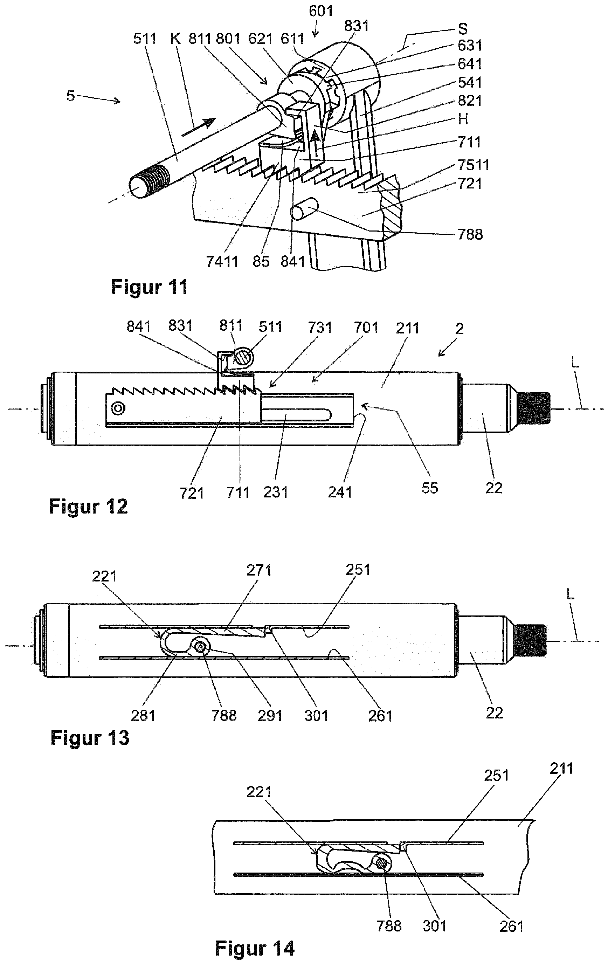

Figuren 11 bis 14 zeigen eine Energieabsorptionseinrichtung 731 mit einer Crashaktivierung durch einen manuell betätigbaren Spannhebel 541 einer Spanneinrichtung 5 mit einem Spanngetriebe 601.

In der gezeigten Ausführung umfasst das Spanngetriebe 601 eine fest mit dem Spannhebel 541 (entspricht dem Spannhebel 54) und der Spannachse 511 (entspricht der Spannachse 51) verbundene erste Nockenscheibe 611 und eine mit dem Seitenteil der Trageinheit 3 verbundene zweite Nockenscheibe 621. Die Nockenscheiben 611 und 621 haben axial gegeneinander gerichtete Nocken 631 und 641, die aufeinander gleiten. Zur Fixierung der Stelleinheit 201 (entspricht der Stelleinheit 2 in den vorherigen Figuren) wird die Spannachse 511 mittels des Spannhebels 541 gedreht, so dass die Nocken 631 und 641 aus einer Löseposition, in der eine Nocke 631, 641 der einen Nockenscheibe 611, 621 jeweils in eine Vertiefung zwischen den Nocken 641, 631 der jeweils anderen Nockenscheibe 621, 611 eingreift, in eine Fixierposition gebracht werden, in der die Nocken 631, 641 mit ihren Erhebungen axial gegeneinander liegen.

In der gelösten Stellung bzw. Freigabepositionist die Verzahnung 7511 des Zahnsteins 711 vollständig von der Verzahnung 7411 der Zahnplatte 721 in Hubrichtung H abgehoben, d.h. gelöst, wodurch die Crasheinrichtung 701 deaktiviert ist. Diese Freigabeposition des Hubgetriebes 801 entspricht gleichzeitig der Freigabeposition des Spanngetriebes 601, so dass die Stelleinheit 201 relativ zur Trageinheit 3 in Längsrichtung L verstellt werden kann.

Die Crasheinrichtung 701 umfasst das Arretierteil 711 in Form eines Zahnsteins 711 und das Eingriffsteil 721 in Form der Zahnplatte 721. Die Zahnplatte 721 ist über eine Energieabsorptionseinrichtung 731 mit dem Mantelrohr 211 (entspricht dem Mantelrohr 21) verbunden und hat auf einer Seitenfläche, die parallel zur Längsachse L und parallel zur Drehachse S ausgerichtet ist, als Verzahnung 7511 ausgebildete Formschlusselemente. Der Zahnstein 711 hat eine der Verzahnung 7511 gegenüberliegende, korrespondierende Verzahnung 7411, die formschlüssig in die Verzahnung 7511 eingreifen kann. Bevorzugt haben die Zähne der Verzahnung 7411, 7511 einen sägezahnförmigen Querschnitt. Die Zahnplatte 711 weist einen sich zur Drehachse S parallelen und der Mantelrohr 211 zugewandt erstreckenden Mitnehmer 788 auf.

Die Zahnplatte 721 ist mit einem Biegedraht oder -streifen 221 verbunden, der in einem Gehäuse angeordnet ist, welches von der im Querschnitt U-förmigen Schiene 55 in Verbindung mit einem Abschnitt des Mantelrohrs 211 gebildet wird. Das Eingriffsteil 721 weist hierzu den von einem Stift gebildeten Mitnehmer 788 auf, der durch einen Schlitz 231 in der Wand 241 der Schiene 55 ragt. Der Schlitz 231 erstreckt sich in die Richtung der Längsachse L. Die Schiene weist zusätzlich zu der Wand 241 einen Seitenschenkel 251 und einen Seitenschenkel 261 auf, wobei jeder dieser Seitenschenkel 251, 261 im Wesentlichen parallel zur Längsachse L und zur Drehachse S. Unter "im Wesentlichen parallel" wird eine Abweichung in einem Raumwinkel bis zu ±10° verstanden.

Über den durch diesen Schlitz 231 ragenden Mitnehmer 788 ist das Eingriffsteil 721 weiter in Längsrichtung der Stelleinheit 201 von dieser verschiebbar geführt. Denkbar und möglich ist auch eine Anordnung des Mitnehmers am Biegedraht oder -streifen 221. Die verschiebbare Führung des Eingriffsteils 721 von der Stelleinheit 2 kann auch in anderer Weise als dargestellt erfolgen.

Der Biegedraht oder-streifen 221 besitzt über eine Umbiegung von 180° verbundene Schenkel 271, 281, die sich im Wesentlichen in Richtung der Längsachse L erstrecken. Die beiden Schenkel 271, 281 liegen an gegenüberliegenden Seiten des Gehäuses an, und zwar an den Innenflächen der Seitenschenkel 251, 261 der Schiene 55. Der Rollbiegeradius des Biegedrahts oder -streifens 221 bei seiner Verformung, insbesondere während der fortschreitenden Biegung, im Crashfall wird dadurch begrenzt und bestimmt.

Zur Verbindung der Zahnplatte 721 mit dem Biegedraht oder -streifen 221 ragt der stiftförmige Mitnehmer 788 in eine Bohrung 291 im Schenkel 281. Andere Verbindungen der Zahnplatte 721 mit dem Biegedraht oder-streifen 221 sind denkbar und möglich.

Der andere, nicht mit der Zahnplatte 721 verbundene Schenkel 271 des Biegedrahts oder - streifens 221 stützt sich an einem Anschlag 301 der Schiene 55 ab, von dem er bei einer Verschiebung der Stelleinheit 201 gegenüber der Trageinheit 302 in Richtung der Längsachse L mitgenommen wird. Andere Verbindungen des Schenkels 271 mit dem Gehäuse, in dem der Biegedraht oder-streifen 221 angeordnet ist, um den Schenkel 271 im Crashfall in Richtung der Längsachse L mitzunehmen, sind denkbar und möglich.

Wenn eine einen Grenzwert überschreitende Kraft in Richtung der Längsachse L wirkt (=Crashfall) so wird die Stelleinheit 201 in Richtung der Längsachse L gegenüber der Trageinheit 302 (entspricht der Trageinheit 3), die fest mit dem Fahrzeug verbunden ist, (in eine zur Fahrzeugfront weisende Richtung) verschoben, wobei sich teleskopierbare Abschnitte der Lenkspindel 22 ineinander schieben und sich die Stelleinheit 201 gegenüber der vom Zahnstein 711 gehaltenen Zahnplatte 721 verschiebt und hierbei der Biegedraht oder Biegestreifen 221 verformt wird. Diese Verformung umfasst insbesondere die Änderung der Stelle der Umbiegung zwischen den Schenkeln 271, 281. Durch diese plastische Verformung des Biegedrahts oder -streifens 221 wird Energie absorbiert.

Im gezeigten Ausführungsbeispiel vergrößert sich die Dicke des Schenkels 271 zu seinem freien Ende hin, beispielsweise keilförmig. Dadurch und da der Biegedraht oder -streifen 221 zwischen den von den Seitenschenkeln 251, 261 gebildeten Seitenwänden des Gehäuses eingesperrt ist, kommt es bei einer zunehmenden Verschiebung der Stelleinheit 201 gegenüber der Trageinheit der Lenksäule schließlich zu einem Anlaufen des Abschnitts 281 (im Bereich, in dem sie mit der Bohrung 291 versehen ist) an den sich verdickenden Bereich des Schenkels 271, wodurch es zu einer zusätzlichen Verformungsarbeit durch Kompression kommt.

Durch die geometrische Ausbildung des Biegedrahts oder -streifens 221 kann eine gewünschte Kennlinie für die Energieaufzehrung erreicht werden. Hierzu kann der Querschnitt des Schenkels 271 über seiner Länge in Bezug auf seine Fläche und/oder in Bezug auf seine Kontur mit einem vordefinierten Verlauf ausgebildet sein.

### Bezugszeichenliste

- 1: Lenksäule
- 2, 201, 202: Stelleinheit
- 21, 211: Mantelrohr
- 213: Gegenanschlagfläche
- 22: Lenkspindel
- 221: Biegestreifen / Biegedraht
- 23: Abschnitt
- 231: Schlitz
- 241: Wand
- 251, 261: Seitenschenkel
- 271, 281: Schenkel
- 291: Bohrung
- 3, 302: Trageinheit
- 301: Anschlag
- 31, 32: Seitenabschnitte
- 33: Schlitz
- 34, 342: Führung
- 35: Bewegungsdurchgang
- 36: Öffnung
- 4: Konsoleneinheit
- 5: Spanneinrichtung
- 51, 511, 512: Spannachse
- 54, 541: Spannhebel
- 55: Schiene
- 6, 601: Spanngetriebe
- 61, 62, 611, 621: Nockenscheibe
- 63, 64, 631, 641: Nocken
- 7, 701: Crasheinrichtung
- 71, 711, 712: Zahnstein (Arretierteil)
- 72, 721,722: Zahnplatte (Eingriffsteil)
- 731: Energieabsorptionseinrichtung
- 74, 75, 7411, 7412,: Verzahnung (Formschlusselemente)
- 7511, 7512: Verzahnung (Formschlusselemente)
- 741, 751: Zähne
- 76: Längsnut
- 788: Mitnehmer
- 8, 801, 802: Hubgetriebe
- 81, 811, 812: Nocken
- 82, 821, 822: Kopplungsabschnitt
- 83, 831, 832: Hubfläche
- 84, 841, 842: Druckfläche
- 85: Blattfeder (Federelement)
- 9: Anschlageinrichtung
- 91: Anschlagelement
- 911: Befestigungselement
- 912: Sperrabschnitt
- 913: Anschlagfläche
- 914: Anschlagstift
- 915: Kopf
- 916: Federelement
- 92: Betätigungskörper
- 921: Oberseite
- 93: Führungsgehäuse
- 94: Führungsbahn
- 941: Abschnitt
- 942: Wälzkörper
- K: Klemmhub
- L: Längsachse
- S: Drehachse
- H: Hubrichtung
- X: Anschlagposition
- F: Trägheitskraft
- E: Federkraft

## Patentansprüche

1. Lenksäule (1) für ein Kraftfahrzeug, umfassend
eine Stelleinheit (2) mit einer in einem Mantelrohr (21) um ihre Längsachse (L) drehbar gelagerten Lenkspindel (22),
eine Trageinheit (3), die mit der Karosserie des Kraftfahrzeugs verbindbar ist und in der die Stelleinheit (2) in Richtung der Längsachse (L) verstellbar aufnehmbar ist, und eine Anschlageinrichtung (9) mit einem bewegbar gelagerten Anschlagelement (91), das in eine Sperrstellung oder eine Freigabestellung bringbar ist, wobei das Anschlagelement (91) in der Sperrstellung den Verstellweg der Stelleinheit (2) relativ zur Trageinheit (3) begrenzt und in der Freigabestellung die Verstellbarkeit in Richtung der Längsachse (L) über den in der Sperrstellung begrenzten Verstellweg hinaus freigibt, wobei die Anschlageinrichtung (9) einen Betätigungskörper (92) mit einer trägen Masse aufweist, der mit dem Anschlagelement (91) wirkverbunden und relativ zur Trageinheit (3) bewegbar gelagert ist, wobei der Betätigungskörper (92) aufgrund seiner Massenträgheit im Crashfall mit dem Anschlagelement (91) zusammenwirkt zur Bewegung des Anschlagelements (91) aus der Sperrstellung in die Freigabestellung,
**dadurch gekennzeichnet,**
**dass** zwischen der Stelleinheit (2) und der Trageinheit (3) eine Energieabsorptionseinrichtung (73, 731) angeordnet ist.

2. Lenksäule nach Anspruch 1, **dadurch gekennzeichnet, dass** die Anschlageinrichtung (9) ein Getriebe aufweist.

3. Lenksäule nach Anspruch 2, **dadurch gekennzeichnet, dass** das Getriebe als Umlenkgetriebe ausgebildet ist, welches eine Bewegungskomponente des Betätigungskörpers (92) parallel zur Längsachse (L) umsetzt in eine Bewegung des Anschlagelements (91) quer zur Längsachse (L).

4. Lenksäule nach einem der vorangehenden Ansprüche, **dadurch gekennzeichnet, dass** das Anschlagelement (91) in Sperrstellung quer zur Längsachse (L) relativ zur Trageinheit (3) vorsteht in einen Bewegungsdurchgang der Stelleinheit (2).

5. Lenksäule nach einem der vorangehenden Ansprüche, **dadurch gekennzeichnet, dass** die Stelleinheit (2) eine Gegenanschlagfläche (213) aufweist, die in Sperrstellung in Längsrichtung nach vorn gegen eine Anschlagfläche (913) des Anschlagelements (91) kontaktierbar ist.

6. Lenksäule nach einem der vorangehenden Ansprüche, **dadurch gekennzeichnet, dass** der Betätigungskörper (92) an der Trageinheit (3) entlang einer Führungsbahn (94) geführt ist.

7. Lenksäule nach einem der vorangehenden Ansprüche, **dadurch gekennzeichnet, dass** die Anschlageinrichtung ein Führungsgehäuse (93) aufweist.

8. Lenksäule nach einem der vorangehenden Ansprüche, **dadurch gekennzeichnet, dass** der Betätigungskörper (92) auf zumindest einem Wälzkörper (942) gelagert ist.

9. Lenksäule nach einem der vorangehenden Ansprüche, **dadurch gekennzeichnet, dass** der Betätigungskörper (92) mit einer reibungsmindernden Gleitbeschichtung zumindest teilweise beschichtet ist.

10. Lenksäule nach einem der vorangehenden Ansprüche, **dadurch gekennzeichnet, dass** die Anschlageinrichtung (9) eine Energiespeichereinrichtung (91, 916) und eine Auslösevorrichtung aufweist, wobei die Energiespeichereinrichtung (91, 916) wirkverbunden ist mit dem Anschlagelement (91) und die Auslösevorrichtung wirkverbunden ist mit dem Betätigungskörper (92).

11. Lenksäule nach einem der vorangehenden Ansprüche, **dadurch gekennzeichnet, dass** die Energiespeichereinrichtung eine Vorspanneinrichtung (91, 916) aufweist, welches das Anschlagelement (91) in der Sperrstellung in Richtung der Freigabestellung elastisch vorspannt.

12. Lenksäule nach einem der vorangehenden Ansprüche, **dadurch gekennzeichnet, dass** die Lenksäule (1) eine Spanneinrichtung (5) umfasst, die in Fixierstellung die Stelleinheit (2) im Normalbetrieb relativ zur Trageinheit (3) festlegt und die in Freigabestellung eine Verstellung der Stelleinheit (2) relativ zur Trageinheit (3) zumindest in Längsrichtung (L) freigibt.

## Claims

1. Steering column (1) for a motor vehicle, comprising
an adjustment unit (2) with a steering spindle (22) mounted rotatably about its longitudinal axis (L) in a casing tube (21),
a support unit (3) which is connectable to the body of the motor vehicle and in which the adjustment unit (2) can be mounted so as to be adjustable in the direction of the longitudinal axis (L), and
a stop device (9) with a movably mounted stop element (91) which can be brought into a blocking position or a release position, wherein, in the blocking position, the stop element (91) limits the adjustment travel of the adjustment unit (2) relative to the support unit (3) and, in the release position, allows the adjustability in the direction of the longitudinal axis (L) beyond the adjustment travel which is limited in the blocking position, wherein the stop device (9) has an actuation body (92) which has an inert mass, is actively connected to the stop element (91) and mounted movably relative to the support unit (3), wherein, in the event of a crash, the mass inertia of the actuation body (92) causes the latter to interact with the stop element (91) for movement of the stop element (91) out of the blocking position into the release position,
**characterized in that**
an energy absorption device (73, 731) is arranged between the adjustment unit (2) and the support unit (3) .

2. Steering column according to Claim 1, **characterized in that** the stop device (9) comprises a gear mechanism.

3. Steering column according to Claim 2, **characterized in that** the gear mechanism is configured as a deflection gear which converts a movement component of the actuation body (92) parallel to the longitudinal axis (L) into a movement of the stop element (91) transversely to the longitudinal axis (L).

4. Steering column according to any of the preceding claims, **characterized in that** in the blocking position, the stop element (91) protrudes relative to the support unit (3) transversely to the longitudinal axis (L) into a movement space of the adjustment unit (2).

5. Steering column according to any of the preceding claims, **characterized in that** the adjustment unit (2) has a counter stop face (213) which, in the blocking position, can make contact against a stop face (913) of the stop element (91) in the forward longitudinal direction.

6. Steering column according to any of the preceding claims, **characterized in that** the actuation body (92) is guided along a guide track (94) on the support unit (3) .

7. Steering column according to any of the preceding claims, **characterized in that** the stop device comprises a guide housing (93).

8. Steering column according to any of the preceding claims, **characterized in that** the actuation body (92) is mounted on at least one roller body (942).

9. Steering column according to any of the preceding claims, **characterized in that** the actuation body (92) is at least partially coated with a friction-reducing slip coating.

10. Steering column according to any of the preceding claims, **characterized in that** the stop device (9) comprises an energy storage device (91, 916) and a trigger device, wherein the energy storage device (91, 916) is actively connected to the stop element (91) and the trigger device is actively connected to the actuation body (92).

11. Steering column according to any of the preceding claims, **characterized in that** the energy storage device has a pretension device (91, 916) which, in the blocking position, elastically pretensions the stop element (91) in the direction of the release position.

12. Steering column according to any of the preceding claims, **characterized in that** the steering column (1) comprises a clamping device (5) which, in the fixing position, fixes the adjustment unit (2) relative to the support unit (3) in normal mode and which, in the release position, allows an adjustment of the adjustment unit (2) relative to the support unit (3) at least in the longitudinal direction (L).

## Revendications

1. Colonne de direction (1) pour un véhicule automobile, comprenant
une unité de réglage (2) dotée d'un arbre de direction (22) monté dans un tube de protection (21) de manière à pouvoir tourner autour de son axe longitudinal (L),
une unité de support (3) qui peut être reliée à la carrosserie du véhicule automobile et dans laquelle l'unité de réglage (2) peut être reçue de manière réglable en direction de l'axe longitudinal (L), et
un dispositif de butée (9) doté d'un élément de butée (91) monté mobile et pouvant être amené dans une position de blocage ou une position de déblocage, l'élément de butée (91) limitant, dans la position de blocage, la course de réglage de l'unité de réglage (2) par rapport à l'unité de support (3), et débloquant, dans la position de déblocage, la possibilité de réglage en direction de l'axe longitudinal (L) au-delà de la course de réglage limitée dans la position de blocage, dans laquelle le dispositif de butée (9) présente un corps d'actionnement (92) muni d'une masse inerte, qui se trouve en relation active avec l'élément de butée (91) et est monté mobile par rapport à l'unité de support (3), dans laquelle le corps d'actionnement (92), en raison de son inertie de masse, coopère en cas de collision avec l'élément de butée (91) pour déplacer l'élément de butée (91) de la position de blocage à la position de déblocage,
**caractérisée en ce qu'**un dispositif d'absorption d'énergie (73, 731) est disposé entre l'unité de réglage (2) et l'unité de support (3).

2. Colonne de direction selon la revendication 1, **caractérisée en ce que** le dispositif de butée (9) présente un mécanisme.

3. Colonne de direction selon la revendication 2, **caractérisée en ce que** le mécanisme est réalisé sous la forme d'un mécanisme de renvoi qui transforme une composante de mouvement du corps d'actionnement (92) en parallèle à l'axe longitudinal (L) en un mouvement de l'élément de butée (91) transversalement à l'axe longitudinal (L).

4. Colonne de direction selon l'une quelconque des revendications précédentes, **caractérisée en ce que** dans la position de blocage, l'élément de butée (91) fait saillie transversalement à l'axe longitudinal (L) par rapport à l'unité de support (3) dans un passage de mouvement de l'unité de réglage (2).

5. Colonne de direction selon l'une quelconque des revendications précédentes, **caractérisée en ce que** l'unité de réglage (2) présente une surface de contrebutée (213) qui, dans la position de blocage, peut être mise en contact dans la direction longitudinale vers l'avant avec une surface de butée (913) de l'élément de butée (91).

6. Colonne de direction selon l'une quelconque des revendications précédentes, **caractérisée en ce que** le corps d'actionnement (92) est guidé sur l'unité de support (3) le long d'une glissière de guidage (94).

7. Colonne de direction selon l'une quelconque des revendications précédentes, **caractérisée en ce que** le dispositif de butée présente un boîtier de guidage (93) .

8. Colonne de direction selon l'une quelconque des revendications précédentes, **caractérisée en ce que** le corps d'actionnement (92) est monté sur au moins un élément roulant (942).

9. Colonne de direction selon l'une quelconque des revendications précédentes, **caractérisée en ce que** le corps d'actionnement (92) est recouvert au moins partiellement d'un revêtement de glissement diminuant la friction.

10. Colonne de direction selon l'une quelconque des revendications précédentes, **caractérisée en ce que** le dispositif de butée (9) présente un dispositif de stockage d'énergie (91, 916) et un dispositif de déclenchement, le dispositif de stockage d'énergie (91, 916) étant en liaison active avec l'élément de butée (91) et le dispositif de déclenchement étant en liaison active avec le corps d'actionnement (92).

11. Colonne de direction selon l'une quelconque des revendications précédentes, **caractérisée en ce que** le dispositif de stockage d'énergie présente un dispositif de sollicitation (91, 916) qui sollicite élastiquement l'élément de butée (91) dans la position de blocage en direction de la position de déblocage.

12. Colonne de direction selon l'une quelconque des revendications précédentes, **caractérisée en ce que** la colonne de direction (1) comprend un dispositif de serrage (5) qui, dans une position de fixation, fixe l'unité de réglage (2) en fonctionnement normal par rapport à l'unité de support (3), et qui, dans la position de déblocage, débloque un réglage de l'unité de réglage (2) par rapport à l'unité de support (3) au moins dans la direction longitudinale (L).
